(19) Europäisches Patentamt
European Patent Office
Office européen des brevets

(11) **EP 4 231 233 B1**

(12) **EUROPÄISCHE PATENTSCHRIFT**

(45) Veröffentlichungstag und Bekanntmachung des Hinweises auf die Patenterteilung:
**25.03.2026  Patentblatt 2026/13**

(21) Anmeldenummer: **23156092.1**

(22) Anmeldetag: **10.02.2023**

(51) Internationale Patentklassifikation (IPC):
*G06T 7/00* *(2017.01)*

(52) Gemeinsame Patentklassifikation (CPC):
**G06T 7/0004;** G06T 2207/10056;
G06T 2207/20081; G06T 2207/20084

(54) **COMPUTERIMPLEMENTIERTES VERFAHREN FÜR DIE SCHÄDIGUNGSERKENNUNG IN EINEM KÖRPER, SOWIE PRÜFSYSTEM**

COMPUTER-IMPLEMENTED METHOD FOR DAMAGE DETECTION IN A BODY, AND TEST SYSTEM

PROCÉDÉ MIS EN OEUVRE PAR ORDINATEUR POUR LA DÉTECTION DE DOMMAGES DANS UN CORPS, ET SYSTÈME DE TEST

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.02.2022  DE 102022103997**

(43) Veröffentlichungstag der Anmeldung:
**23.08.2023  Patentblatt 2023/34**

(73) Patentinhaber: **Deutsches Zentrum für Luft- und Raumfahrt e.V.**
**53227 Bonn (DE)**

(72) Erfinder:
 • **Breitbarth, Eric**
  **51147 Köln (DE)**
 • **Strohmann, Tobias**
  **51147 Köln (DE)**
 • **Melching, David**
  **51147 Köln (DE)**
 • **Paysan, Florian**
  **51147 Köln (DE)**
 • **Dietrich, Eric**
  **51147 Köln (DE)**
 • **Requena, Guillermo**
  **51147 Köln (DE)**

(74) Vertreter: **dompatent**
**Partnerschaft von**
**Patentanwälten und Rechtsanwälten mbB**
**Deichmannhaus am Dom**
**Bahnhofsvorplatz 1**
**50667 Köln (DE)**

(56) Entgegenhaltungen:
 • **STROHMANN TOBIAS ET AL: "Automatic detection of fatigue crack paths using digital image correlation and convolutional neural networks", FATIGUE AND FRACTURE OF ENGINEERING MATERIALS AND STRUCTURES., vol. 44, no. 5, 17 February 2021 (2021-02-17), GB, pages 1336 - 1348, XP093061721, ISSN: 8756-758X, DOI: 10.1111/ffe.13433**
 • **MELCHING D. ET AL: "Explainable AI for precise fatigue crack detection", 7 September 2021 (2021-09-07), XP093061730, Retrieved from the Internet <URL:https://elib.dlr.de/146522/1/MaterialsWeek2021_ExplainableAI.pdf> [retrieved on 20230706]**
 • **BREITBARTH ERIC ET AL: "Determination of Stress Intensity Factors and J integral based on Digital Image Correlation", FRATTURA ED INTEGRIT� STRUTTURALE, vol. 13, no. 49, 21 May 2019 (2019-05-21), pages 12 - 25, XP093062068, DOI: 10.3221/IGF-ESIS.49.02**

• REZAIE AMIR ET AL: "Comparison of crack segmentation using digital image correlation measurements and deep learning", CONSTRUCTION AND BUILDING MATERIALS, ELSEVIER, NETHERLANDS, vol. 261, 3 September 2020 (2020-09-03), XP086283562, ISSN: 0950-0618, [retrieved on 20200903], DOI: 10.1016/J.CONBUILDMAT.2020.120474

**Beschreibung**

Eine hinreichend genaue Erkennung und Verfolgung von Defekten, Schädigung und Rissen ist ein essenzieller Bestandteil bei der Inspektion und Überwachung aller Körper, wie insbesondere struktureller Bauteile und Komponenten, die nicht-konstanten Lasten während ihres Betriebes ausgesetzt sind. Ermüdung(-srissfort-schritt) ist in diversen technischen Bereichen der relevanteste Schadensfall.

Insbesondere bei Leichtbaustrukturen wie Flugzeugen ist dies ein essenzieller Sicherheitsaspekt. Bei Inspektionen werden beispielsweise Sichtprüfungen, Farbeindringuntersuchungen, Ultraschallprüfungen, Wirbelstrommessungen und Röntgenprüfungen eingesetzt, um Schädigungen an den untersuchten Strukturen möglichst frühzeitig festzustellen und gegebenenfalls den Fortschritt einer Schädigung in regelmäßigen Abständen zu überwachen. Diese Verfahren haben gemeinsam, dass die geometrische Form und Ausprägung einer Schädigung bzw. eines Defekts als solche gesucht wird.

Bei werkstoffmechanischen Versuchen zur Charakterisierung von Rissen (z.B. Threshold, Rissfortschritt, Bruchzähigkeiten, Risswiderstandskurven) müssen diese in ihrer Länge und Orientierung sehr genau erfasst werden. Solche Versuche finden auf Coupon-Ebene (ca. 1 - 1000 mm Größe) bis zur Prüfung von ganzen Flugzeugstrukturen statt. Vor allem bei Laborversuchen an metallischen Proben existieren verschiedene Arten von etablierten Risslängenmessverfahren. Bei der Potentialrisslängenmessung wird ein konstanter Strom durch die Probe geleitet. An Messpunkten über- und unterhalb des Risspfades wird eine Potentialdifferenz gemessen, die sich abhängig der Risslänge erhöht und aus der sich beispielsweise mit der Johnson-Formel die aktuelle Risslänge berechnen lässt.

Bei der Compliance-Methode wird die Öffnung des Risses am sogenannten Rissmund gemessen und auf die Risslänge umgerechnet. Abwandlungen dieser Methoden sind beispielsweise das Aufkleben von Messgittern oder Messstreifen auf den Proben oder das Nutzen von Wechsel- oder Gleichströmen. Eine Voraussetzung und gleichzeitig signifikante Beschränkung der vorbezeichneten Methoden ist, dass der Riss gerade verlaufen bzw. wachsen muss, um die Länge bestimmen zu können.

Nachteilig an den vorbezeichneten, aus dem Stand der Technik bekannten, Verfahren ist zunächst, dass die Wertschöpfung aktueller Rissfortschrittsversuche im Verhältnis zu dem Versuchsaufwand relativ klein ist, da häufig eine einzelne Kurve generiert wird, welche beispielsweise die Abhängigkeit einer Risslänge von der Anzahl an zyklischen aufgeprägten Belastungen bzw. der sogenannten Schwingspielanzahl wiedergibt.

Im Stand der Technik wird weiterhin die Rissspitzenbeanspruchung in Form des zyklischen Spannungsintensitätsfaktors $\Delta K$ in der Regel über analytische Formeln für genormte Proben oder über die Nutzung von Simulationswerkzeugen für nicht genormte Körper bzw. Proben und Bauteil(-komponenten) ermittelt. Ein Nachteil hierbei besteht durch die Idealisierung eines nicht idealen Systems. Reibungsverluste, Temperatureinflüsse, geometrische Ungenauigkeiten durch Toleranzgrenzen oder Materialeffekte wie Anisotropie bleiben hierbei unberücksichtigt.

Die beschriebenen Arten der Risslängenmessung aus dem Stand der Technik sind in ihrer Anwendung stark limitiert. Hierbei lassen sich weder nicht-genormte Proben (z.B. Prototypen von Bauteilen oder Komponenten) prüfen, noch können komplexe Risspfade exakt bestimmt werden. Darüber hinaus sind die Messverfahren in der Theorie exakt, jedoch durch verschiedene Einflüsse, wie die Temperatur, in der Praxis fehlerbehaftet, so dass optische Korrekturmessungen notwendig sind.

Aus Melching D. et al: "Explainable AI for precise fatigue crack detection", 7. September 2021, WP093061730 ist bereits ein trainiertes neuronales Netzwerk für die Schädigungserkennung bekannt geworden.

Ausgehend von dem vorbezeichneten Stand der Technik liegt der vorliegenden Erfindung die Aufgabe zugrunde, ein computerimplementiertes Verfahren für die Schädigungserkennung in einem zu untersuchenden Körper sowie ein Prüfsystem zur Verfügung zu stellen, um die vorbezeichneten Nachteile des Standes der Technik zu beheben und insbesondere eine vereinfachte Schädigungserkennung an zu untersuchenden Körpern, wie beispielsweise auch Prototypen bzw. ganzen Bauteilkomponenten, zu ermöglichen.

Erfindungsgemäß gelöst wird die Aufgabe durch ein computerimplementiertes Verfahren für die Schädigungserkennung gemäß Anspruch 1,, einem Prüfsystem gemäß Anspruch 8, einem Computerprogrammprodukt gemäß Anspruch 11, einem computerlesbaren Speichermedium gemäß Anspruch 12 und der Verwendung eines Verfahrens für die Schädigungserkennung zur Erkennung des Rissfortschritts in einem Bauteil gemäß Anspruch 13.

Ein erster Aspekt der vorliegenden Erfindung betrifft ein computerimplementiertes Verfahren für die Schädigungserkennung in einem zu untersuchenden Körper. Das erfindungsgemäße Verfahren umfasst die Schritte:

a) Generieren mindestens einer ersten makroskopischen Referenzaufnahme mittels einer ersten ortsfesten Bildaufnahmeeinrichtung gebildet durch ein System zur digitalen Bildkorrelation in zwei oder drei Dimensionen und einer Mehrzahl von mikroskopischen Referenzaufnahmen mittels einer zweiten positionierbaren Bildaufnahmeeinrichtung mindestens einer zu untersuchenden Oberfläche des unbelasteten zu untersuchenden Körpers;
b) Aufprägen einer Last oder eines Lastregimes auf den Körper;
c) Generieren mindestens einer makroskopischen Aufnahme der mindestens einen zu untersuchenden Oberfläche des Körpers unter anliegender Last gemäß Verfahrensschritt b) und/oder nach Entlastung über die erste ortsfeste Bildaufnahmeeinrichtung;

d) Berechnen der aktuellen Lokalisierung mindestens eines Schädigungsbereiches und/oder mindestens eines Bereiches einer Rissspitze im Körper unter Verwendung eines trainierten neuronalen Netzwerkes für die Schädigungserkennung unter Nutzung von zwei- oder dreidimensionalen Verschiebungsfeldern ermittelt durch das System zur digitalen Bildkorrelation;

e) Ausrichten der zweiten positionierbaren Bildaufnahmeeinrichtung anhand des mindestens einen Schädigungsbereiches des Körpers und/oder des mindestens einen Bereiches einer Rissspitze im Körper gemäß Verfahrensschritt c) und Generieren mindestens einer mikroskopischen Aufnahme des mindestens einen Schädigungsbereiches mittels der zweiten Bildaufnahmeeinrichtung unter anliegender Last gemäß Verfahrensschritt b) und/oder nach Entlastung.

Optional können in dem erfindungsgemäßen Verfahren die Verfahrensschritte b) - e) um eine beliebige ganzzahlige Anzahl wiederholt werden, wobei im Verfahrensschritt b) eine von der zuvor aufgeprägten Last abweichende Last oder ein abweichendes Lastregime aufgeprägt bzw. auf den zu untersuchenden Körper eingeprägt wird.

Bei dem Verfahren zur Schädigungserkennung kann es sich insbesondere um ein Verfahren zur Erkennung des Schädigungsfortschrittes in einem Körper, wie u.a. um ein Verfahren zur Rissfortschrittserkennung in dem Körper, handeln. Als Schädigung soll im Rahmen der vorliegenden Erfindung nicht lediglich die Entstehung eines Risses in dem Körper und Ausbreitung bzw. Rissfortschrittsverlängerung in einem Bauteil bzw. Körper verstanden werden, sondern jegliches nicht reversibles Schädigungsverhalten innerhalb eines Körpers.

Bei dem zu überprüfenden Körper kann es sich beispielsweise um einen rissbehafteten Prüfkörper handeln, es kann sich anderenfalls bei dem Körper jedoch auch um ein Bauteil handeln, dessen Schädigungsverhalten unter veränderlichen Lastbedingungen und über gewisse Zeiträume beobachtet werden soll, wobei beispielsweise noch kein Riss innerhalb des Bauteils aufgetreten sein muss bzw. vorliegt. Es kann sich beispielsweise bei dem zu überprüfenden Körper um ein Bauteil eines boden-, luft- oder seegebundenen Fahrzeuges handeln.

Bei dem mindestens einen Schädigungsbereich kann es sich um den Bereich einer Rissspitze handeln. Es kann sich bei dem Schädigungsbereich jedoch anderenfalls auch um den Bereich in einem Körper handeln, worin beispielsweise eine Plastifizierung des Materials auftritt.

Bei der Mehrzahl der in Verfahrensschritt a) generierten mikroskopischen Aufnahmen kann es sich beispielsweise um aneinander angrenzende bzw. einander zumindest abschnittsweise bzw. teilweise überlappende Aufnahmen der gesamten mindestens einen zu untersuchenden Oberfläche des zu überprüfenden Körpers handeln.

Die über die zweite positionierbare Aufnahmeeinrichtung generierten Aufnahmen weisen eine höhere Vergrößerung im Vergleich zu den Aufnahmen der ersten ortsfesten Aufnahmeeinrichtung auf. Für die Generierung eines Bildes des gesamten Flächenbereichs der zu untersuchenden mindestens einen Oberfläche ist es erforderlich, eine Mehrzahl an Einzelaufnahmen von Teilbereichen der zu untersuchenden Oberfläche zu generieren, welche aneinander angrenzen bzw. einander zumindest teilweise überlappen und nachfolgend mittels Bildverarbeitungsverfahren durch Assemblierung der Einzelaufnahmen zu einem Gesamtbild der zu untersuchenden Oberfläche zusammengeführt werden können. Dabei werden aus der Mehrzahl von mikroskopischen Einzelaufnahmen beispielsweise ein assembliertes Gesamtbild der Oberfläche mit einer höheren Auflösung als das Bild der makroskopischen ersten Bildaufnahmeeinrichtung generiert.

Zur Erstellung der Vielzahl bzw. Mehrzahl von mikroskopischen Einzelaufnahmen wird die zweite mikroskopische Bildaufnahmeeinrichtung über die zu untersuchende Oberfläche verfahren bzw. verschoben oder zumindest die Winkellage der mikroskopischen Bildaufnahmeeinrichtung im dreidimensionalen Raum verändert, so dass eine Rasterung der Oberfläche mittels der zweiten positionierbaren Bildaufnahmeeinrichtung erfolgt, in dem Sinn, dass die zu untersuchende Oberfläche durch Aufnahme mikroskopischer Aufnahmen von Teil- bzw. Subbereichen der gesamten zu untersuchenden Oberfläche fotografiert wird und damit durch ein Raster von mikroskopischen Aufnahmen erfasst wird.

Bei der ersten makroskopischen Bildaufnahmeeinrichtung kann es sich um ein System zur Aufnahme eines Lichtbildes eines auf der zu beobachtenden Oberfläche des zu überprüfenden Körpers aufgebrachten stochastischen Musters bzw. eines Musters mit stochastischer Verteilung handeln.

Bei der Last oder dem Lastregime im Verfahrensschritt b) kann es sich beispielsweise um vordefinierte Werte handeln, welche auf den zu überprüfenden Körper aufgebracht werden sollen, beispielsweise kann erfindungsgemäß eine definierte Last bzw. ein definierter Lastzustand auf den zu untersuchenden Körper aufgebracht und damit eingebracht werden. Es kann sich jedoch auch alternativ um Lasten handeln, welche auf den zu überprüfenden Körper während einer spezifischen Nutzungsdauer einwirken, die Last oder das Lastregime können erfindungsgemäß auf dem zu überprüfenden Körper beispielsweise mittels einer Prüfmaschine, wie beispielsweise mit einer servohydraulisch angetriebenen Prüfmaschine, eingebracht werden.

Erfindungsgemäß kann es vorgesehen werden, dass das Verfahren vor dem Verfahrensschritt b) weiterhin den Schritt umfasst:

a1) Kalibrieren der Positionierung der zweiten Bildaufnahmeeinrichtung durch Abgleichen der aktuellen Raumlage der zweiten Bildaufnahmeeinrichtung gegenüber der ersten ortsfesten Bildaufnahmeeinrichtung.

Der erfindungsgemäß verwendete Begriff "ortsfest" im Hinblick auf die erste Bildaufnahmeeinrichtung soll erfindungsgemäß dahingehend verstanden werden, dass die Positionierung der ersten Bildaufnahmeeinrichtung im dreidimensionalen Raum zumindest in Relation zu dem zu untersuchenden Körper festgelegt und unveränderlich ist. Im Gegensatz dazu ist die zweite Bildaufnahmeeinrichtung im dreidimensionalen Raum frei positionierbar ausgestaltet, erfindungsgemäß kann die zweite Bildaufnahmeeinrichtung mittels einer Positionierungseinrichtung, wie insbesondere einem Roboterarm, frei im dreidimensionalen Raum gegenüber dem zu untersuchenden Körper ausgerichtet angeordnet bzw. verschwenkt und/oder verfahren werden.

Die zweite Bildaufnahmeeinrichtung weist jedoch bei der Generierung einer spezifischen mikroskopischen Einzelaufnahme eine definierte Lage und Position im dreidimensionalen Raum auf. Erfindungsgemäß kann es jedoch auch vorgesehen sein, die zweite mikroskopische Bildaufnahmeeinrichtung mittels der Positioniervorrichtung kontinuierlich über den Bereich der zu untersuchenden Oberfläche des zu untersuchenden Körpers zu verfahren und dabei sequentiell eine Vielzahl von Einzelbildern oder kontinuierlich beispielsweise eine Videosequenz und damit Abfolge von Einzelbildern zu generieren.

Erfindungsgemäß kann es weiterhin bevorzugt vorgesehen werden, dass im Verfahrensschritt a) mindestens eine makroskopische Referenzaufnahme der gesamten Oberfläche des unbelasteten zu untersuchenden Körpers mittels einer ersten ortsfesten Bildaufnahmeeinrichtung und/oder einer Mehrzahl von mikroskopischen Referenzaufnahmen der gesamten Oberfläche des unbelasteten zu untersuchenden Körpers mittels einer zweiten positionierbaren Bildaufnahmeeinrichtung generiert werden.

Weiterhin kann es vorgesehen werden, dass der Verfahrensschritt e) zusätzlich den Schritt umfasst:

e1) optisches Fokussieren der zweiten Bildaufnahmeeinrichtung auf den Bereich der Schädigung bzw. der Rissspitze.

Aus dem Vergleich der generierten makroskopischen bzw. mikroskopischen Aufnahmen unter definierten Lasten im Vergleich zu den entsprechenden Referenzaufnahmen der unbelasteten Probe können mittels zwei- oder dreidimensionaler digitaler Bildkorrelation die zwei- bzw. dreidimensionalen Verschiebungsfelder auf der mindestens einen zu untersuchenden Oberfläche ermittelt werden.

Erfindungsgemäß kann es weiterhin vorgesehen werden, dass ein Wechselwirkungsintegral bzw. ein J-Integral entlang eines Integrationspfades um die Rissspitze generiert wird.

Weiterhin kann es im erfindungsgemäßen Verfahren vorgesehen werden, dass der erste Term der Williams-Reihe der Spannungsintensitätsfaktoren und/oder die Terme höherer Ordnung der Williams-Reihe, wie beispielsweise der Term zweiter Ordnung (T-Spannung), berechnet werden.

Die Details und die Umsetzung zur Berechnung des J-Integrals sowie der Terme der Williams-Reihe sind in der Veröffentlichung[46] ausführlich beschrieben worden, deren Inhalt im Hinblick auf die Berechnung des J-Integrals sowie der Terme der Williams-Reihe durch Bezugnahme einbezogen werden.

Im Verfahrensschritt c) kann es optional vorgesehen werden, dass die generierten makroskopischen und/oder mikroskopischen Aufnahmen zusammen mit den wesentlichen Verfahrensparametern zu dem Zeitpunkt der Aufnahme der Bilder abgelegt wird, wobei die Verfahrensparameter mindestens ein Element ausgewählt aus der Gruppe von aktuell aufgeprägter Last, aktuell aufgeprägte Lastzyklen bzw. Lastregime, aktuelle Position der Prüfmaschine, weitere Messparameter wie erfasste Dehnungen beispielsweise zusätzlich aufgebrachter Dehnungsmessstreifen umfasst.

Ein zweiter nicht erfindungsgemäßer Aspekt betrifft ein trainiertes neuronales Netz für die Schädigungserkennung. Das erfindungsgemäße neuronale Netz umfasst zunächst ein faltungsbasiertes neuronales Netz (CNN - Convolutional Neural Network) mit U-förmiger Netzarchitektur mit mehreren Kodierblöcken (Encoder) und Dekodierblöcken (Decoder) als Segmentierungszweig und ein vollständig verbundenes neuronales Netz (FCNN - Fully Connected Neural Network) als Regressionszweig. Die Dekodierblöcke sind mit den Kodierblöcken über einen Basisblock miteinander verbunden, wobei die Kodier- und Dekodierblöcke der gleichen Ebene wiederum direkt miteinander verbunden sind (Sprungverbindung, engl. Skip Connections). Der Regressionszweig ist mit dem Basisblock des Segmentierungszweigs verbunden.

Zum Erhalt eines trainierten neuronalen Netzes ist es erforderlich, das erfindungsgemäße Netz mit der vorbezeichneten Netzarchitektur über die folgenden Verfahrensschritte zu trainieren:

1) Initialisierung des neuronalen Netzes mit zufälligen Gewichten;

2) Berechnen des mittleren quadratischen Fehlers zwischen der Vorhersage der Rissspitzenposition und der tatsächlichen Rissspitzenposition $\hat{y} = (\hat{y}_1, \hat{y}_2) \in [-1,1]^2$ über die Formel:

$$\mathrm{MSE}(y, \hat{y}) = \sqrt{(y_1 - \hat{y}_1)^2 + (y_2 - \hat{y}_2)^2} \qquad (1)$$

als Fehler des Regressionszweiges des neuronalen Netzes;

3) Berechnen der Fehlers der Rissspitzensegmentierung durch Berechnung des "Dice"-Fehlers[42] (Dice Loss) für die Segmentierungsaufgabe über die Formel:

$$\text{Dice}(z,\hat{z}) = 1 - \frac{2\sum_{ij} z_{ij}\,\hat{z}_{ij} + \varepsilon}{\sum_{ij}(z_{ij} + \hat{z}_{ij}) + \varepsilon} \qquad\qquad (2)$$

wobei $z = (z_{ij})$ mit $z_{ij} \in [0,1]$ die Segmentierungsaufgabe (nach Sigmoid-Aktivierung) bezeichnet und $\hat{z} = (\hat{z}_{ij})$ für die Grundwahrheit steht. Mit $\varepsilon > 0$ als kleine Konstante, die eingeführt wird, um den Fall $z = \hat{z} \equiv 0$ abzudecken, wobei bevorzugt $\varepsilon = 10^{-6}$ gewählt wird, als Fehler des Segmentierungszweiges des neuronalen Netzes;

4) Berechnen einer gewichteten Gesamtverlustfunktion $\text{Loss}_{\omega}(z, y, \hat{z}, \hat{y})$ über die Formel:

$$\text{Loss}_{\omega}(z, y, \hat{z}, \hat{y}) = \text{Dice}(z,\hat{z}) + \omega\,\text{MSE}(y,\hat{y}) \qquad\qquad (3)$$

wobei $\omega \geq 0$ ein Gewichtungsfaktor ist, der den Trainingseinfluss des FCNN/Segmentierungszweigs des neuronalen Netzes abstimmt;

5) Optimieren der Modellparameter des neuronalen Netzes mittels "Backpropa-gation"-Algorithmus unter Nutzung der gewichteten Gesamtverlustfunktion $\text{Loss}_{\omega}(z, y, \hat{z}, \hat{y})$ zum Erhalt des trainierten neuronalen Netzes für die Schädigungserkennung.

Im Segmentierungszweig des neuronalen Netzes können eine Anzahl von jeweils vier Kodier- und Dekodierblöcken vorgesehen werden.

Das neuronale Netz bzw. die Netzarchitektur wird als "ParallelNets" bezeichnet, welches eben ein neuronales Netz kennzeichnet, welches parallel eine Segmentierung und eine Regression über entsprechende parallele Netzzweige ausführt. Dafür ist in dem erfindungsgemäßen neuronalen Netz ein "Convolutional" (CNN bzw. faltungsbasiertes neuronales Netz) als Segmentierungszweig und ein "Fully Connected Neural Network" (FCNN bzw. vollständig verbundenes neuronales Netz) als Regressionszweig vorgesehen. Während des Trainings des erfindungsgemäßen neuronalen Netzes bzw. der Netzarchitektur werden für das neuronale Netz zwei Fehler berechnet: für den Regressionszweig wird der sogenannte Mean-Squared Error und für den Segmentierungszweig der sogenannte Dice-Loss Error berechnet. Über eine mathematische Gewichtung werden anschließend die beiden vorbezeichneten Fehler summiert bzw. zu einem Gesamtfehler $\text{Loss}_{\omega}$ zusammengerechnet und mittels eines rückwärts propagierenden Algorithmus (engl. Back-Propagation-Algorithmus) zur Optimierung bzw. Anpassung der Parameter des neuronalen Netzes genutzt. Das erfindungsgemäße neuronale Netz sowie das Trainingsverfahren können beispielsweise über die Open-Source-Programm-Bibliothek "PyTorch" umgesetzt werden, welche eine auf maschinelles Lernen ausgerichtete Open-Source-Programm-Bibliothek unter Verwendung der Programmiersprache Python darstellt.

Die Optimierung des vorbezeichneten neuronalen Netzes in der beschriebenen Netzarchitektur und unter Nutzung des vorbeschriebenen Gesamtfehlers mittels Back-Propagation-Algorithmus können beispielsweise in dem Programmpaket PyTorch über die Nutzung des sogenannten Adam-Optimierers vollzogen werden.

Die Quantifizierung von Schädigungen in zu untersuchenden Körpern, wie beispielsweise die Untersuchung des Ermüdungsrisswachstums, ist von großer Bedeutung für die Bewertung der Lebensdauer und der Schadenstoleranz von kritischen technischen Strukturen und Komponenten, die nicht konstanten Betriebslasten ausgesetzt sind.[1] Daten zur Ermüdungsrissausbreitung (engl. fatigue crack propagation, fcp) werden in der Regel aus Standardexperimenten unter reinen Mode-I-Belastungen abgeleitet. Daher wird ein gerader Rissverlauf erwartet, der mit experimentellen Techniken wie der Gleichstrom-Potentialabfallmethode überwacht werden kann.[2,3] Effekte wie Rissabknicken, -verzweigung, -ablenkung oder asymmetrisch wachsende Risse können nicht ohne weitere Annahmen erfasst werden, was die Anwendung klassischer Methoden für mehrachsige Belastungsbedingungen erschwert. Es werden daher alternative Methoden benötigt, die die Entwicklung von Rissen unter komplexen Belastungsbedingungen erfassen können.

In den letzten Jahren hat sich die digitale Bildkorrelation (DIC) für die Generierung von Oberflächenverschiebungen und Dehnungen im gesamten Feld von fcp-Experimenten zu einem wichtigen Instrument entwickelt.[4] In Verbindung mit geeigneten Materialmodellen können die DIC-Daten zur Bestimmung bruchmechanischer Parameter wie Spannungsintensitätsfaktoren (SIFs)[1], J-Integral[6] sowie lokale Schädigungsmechanismen um die Rissspitze und innerhalb der plastischen Zone[7,8] genutzt werden. All dies erfordert eine genaue Kenntnis des Rissverlaufs und insbesondere der Position der Rissspitze. Gradientenbasierte Algorithmen wie die Sobel-Kantenfindungsroutine oder, wie kürzlich gezeigt, Faltungsneuronale Netze[9] (CNNs) können angewendet werden, um den Rissverlauf zu identifizieren. Darüber hinaus kann das charakteristische Dehnungsfeld vor der Rissspitze dabei helfen, die tatsächlichen Koordinaten der Rissspitze durch Anpassung einer abgeschnittenen Williams-Reihe an die experimentellen Daten zu ermitteln.[10] Die präzise und zuverlässige Erkennung von Rissspitzen anhand von DIC-Verschiebungsdaten ist jedoch aufgrund des inhärenten Rauschens und der Artefakte in den DIC-Daten noch immer eine schwierige Aufgabe.[11]

CNNs führten zu enormen Durchbrüchen bei der computergestützten Bilderkennung wie Bildklassifizierung[12], Objekterkennung[13] oder semantische Segmentierung[14]. In jüngster Zeit halten Deep-Learning-Algorithmen auch Einzug in die Materialwissenschaften[15], Mechanik[16,17], Physik[18] und sogar bei der Modellierung von Ermüdung[19]. CNNs sind extrem flexibel und bestehen aus Millionen von einstellbaren Parametern, die es ihnen ermöglichen, komplexe Muster und Merkmale zu lernen. Andererseits ist es aufgrund ihrer Tiefe und Komplexität sehr schwierig, die Funktionsdarstellung dieser Modelle zu erklären. Dennoch ist die Erklärbarkeit und Interpretierbarkeit[20] solcher Black-Box-Modelle von entscheidender Bedeutung, um ihre Robustheit und Zuverlässigkeit zu gewährleisten und um Verzerrungen der Trainingsdaten zu erkennen.[21]

Es gibt mehrere Methoden, um sich der Interpretierbarkeit tiefer neuronaler Netze zu nähern.[22,23] Gradient-weighted Class Activation Mapping (Grad-CAM)[24] ist eine hochmoderne Interpretierbarkeitstechnik, die visuelle Erklärungen für die von CNN-basierten Modellen getroffenen Entscheidungen liefert. Sie hilft Nutzern, Vertrauen zu gewinnen, und Experten, stärkere Modelle von schwächeren zu unterscheiden, selbst wenn die Vorhersagen scheinbar ununterscheidbar sind. Die Methode verallgemeinert Class Activation Mappings[25] und wurde kürzlich auf die semantische Segmentierung erweitert[26] und führte zur erfolgreichen Interpretation von CNN-basierten Modellen zur Segmentierung von Hirntumoren.[27,28]

Vorliegend wird die Umsetzung und Anwendung von maschinell erlernten Modellen zur Erkennung von Schädigungen in zu untersuchenden Körpern, wie beispielsweise von Ermüdungsrissen an der Spitze, untersucht. Zu diesem Zweck wird erfindungsgemäß eine neuartige Netzwerkarchitektur namens "ParallelNets" eingeführt. Die Architektur ist eine Erweiterung des klassischen Segmentierungsnetzes U-Net von Ronneberger et al.[29] und seiner Modifikation von Strohmann et al.[9] für die Erkennung von Schädigungen in einem zu untersuchenden Körper und insbesondere zur Segmentierung von Ermüdungsrissen in DIC-Daten. Zu diesem Zweck wird ein paralleles Netz für die Regression und Segmentierung von Rissspitzenkoordinaten in zweidimensionalen Verschiebungsfelddaten trainiert, die mit DIC während eines fcp-Experiments gewonnen wurden.

Material- und Datenerstellung

Die in dieser Arbeit verwendeten beispielhaften experimentellen Daten wurden bei fcp-Experimenten mit MT-Proben aus der Aluminiumlegierung AA2024-T3 gewonnen. Diese Legierung wird üblicherweise für Flugzeugrumpfstrukturen verwendet.[30] Die Verschiebungsfelder wurden während der Experimente mit einem kommerziellen 3D-DIC-System auf der Oberfläche der Proben gemessen. Weitere Einzelheiten zu den Versuchsbedingungen und den resultierenden DIC-Daten finden sich in Strohmann et al.[9] und Breitbarth et al.[31].

Es werden DIC-Verschiebungsdaten aus drei verschiedenen fcp-Experimenten verwendet, die mit $S_{w,t}$ wobei w die Breite und t die Dicke des Probekörpers S in Millimetern ist:

$S_{160,4.7}$ (Strohmann et al.[9])
$S_{160,2.0}$ (Strohmann et al.[9])
$S_{950,1.6}$ (Breitbarth et al.[31])

Bei den ersten beiden Versuchen ($S_{160,4.7}S_{160,2.0}$) wurde die Bildaufnahmegeschwindigkeit durch die Risslänge gesteuert. Die Risslänge wurde mit der Gleichstrom-Potentialabfallmethode unter Verwendung der Johnson-Gleichung bestimmt.[32] Alle 0,2 mm der Rissausdehnung wurde eine Serie von 5 Bildern aufgenommen, beginnend bei maximaler Kraft, gefolgt von vier aufeinanderfolgenden Belastungsschritten (75%, 50%, 25% und 10%). Es wird für weitere Einzelheiten über den Versuchsaufbau und die Datengenerierung für diese beiden Experimente auf Strohmann, et al.[9] verwiesen.

Die Probengröße im dritten Versuch ($S_{950,1.6}$) unterscheidet sich erheblich von den ersten beiden (950 mm im Vergleich zu 160 mm Breite). Der große Probenkörper wurde verwendet, um sehr hohe SIFs zu untersuchen (bis zu ~130 MPa√m) bei Lastverhältnissen $R = 0,1$, 0,3 und 0,5. In der vorliegenden Arbeit werden die experimentellen Daten für das Lastverhältnis $R = 0.3$ verwendet.

Die Grunddaten für die Position der Rissspitze wurden durch manuelle Segmentierung hochauflösender optischer Bilder gewonnen.[9] Hier werden die Wahrheitsdaten aus dem Experiment $S_{160,4.7}$ für das Training und die Validierung (d. h. die Modellauswahl) verwendet.

Da die Segmentierung einer Rissspitze, die sich in einem Pixel innerhalb eines Arrays von 256 × 256 Pixeln (Größe des interpolierten Verschiebungsfeldes, das mit DIC erfasst wurde) unter einem starken Klassenungleichgewicht leidet[33] (~1:50k), wurde die Anzahl der Rissspitzenpixel künstlich erhöht, indem ein umgebendes 3 × 3-Pixel-Raster als Klasse "Rissspitze" bezeichnet wurde.

Es gibt mindestens zwei verschiedene Ansätze zur Entwicklung eines neuronalen Netzes für die Vorhersage von Rissspitzen in Verschiebungsfelddaten:

1) Diese Aufgabe kann als ein Regressionsproblem betrachtet werden und einen faltungsbasierten neuronalen Merkmalsextraktor (convolutional neural feature extractor) mit einem vollständig verbundenen Regressor (fully connected regressor) kombinieren, der die Position der Rissspitze ausgibt.[34] Solche Architekturen wurden bereits für die Schätzung von Bildorientierung verwendet[35], Schätzung der Körperhaltung[36] oder, in jüngerer Zeit, zur Erkennung von Atemwegspathologien[37]. Dieser Ansatz kann vorteilhaft sein, da er das Problem des Klassenungleichgewichts überwindet. Es wurde jedoch festgestellt, dass solche Modelle für unseren Anwendungsfall nicht präzise genug sind und dass sie für Bilder ohne Rissspitzen oder mit mehreren Rissen unbrauchbar sind.

2) Es kann ein semantisches Segmentierungsnetz wie in Strohmann et al.[9] verwendet werden, um Pixel der Klasse "Rissspitze" zu segmentieren. Dieser Ansatz hat Vorteile, wenn es um die Genauigkeit geht. Allerdings sind die Klassen im vorliegenden Fall sehr unausgewogen, was es schwierig macht, das Segmentierungsnetz richtig zu trainieren.

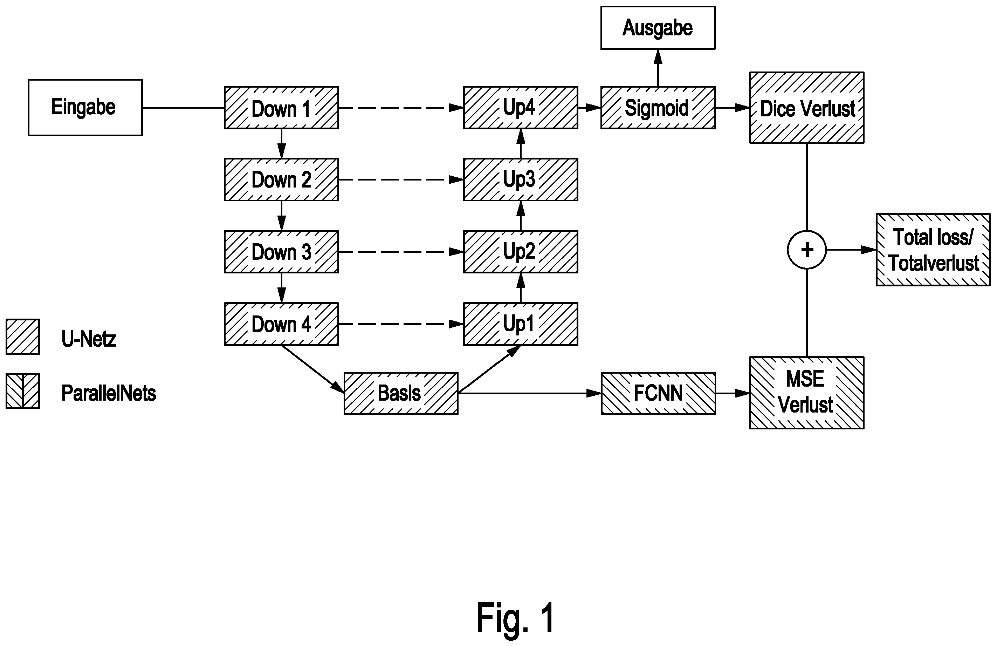

Es wird eine Architektur namens *ParallelNets* vorgestellt, die die beiden oben beschriebenen Ansätze kombiniert und in einem parallelen Netz trainiert[38,39]. Die Architektur ist dargestellt in Die Figur *1:* ein klassisches U-Netz[29] Kodier-Dekodier-Modell wird mit einem Fully Connected Neural Network (FCNN) verschmolzen, das am Flaschenhals des U-Netzes ansetzt. Folglich verfügt ParallelNets über zwei Ausgabeblöcke, nämlich eine *Rissspitzensegmentierung* aus dem U-Netz-Dekodierblock und eine *Rissspitzenposition (x- und y-Koordinaten)* aus dem FCNN-Regressor.

Das U-Netz besteht aus vier Kodierblöcken *Down1, ..., Down4* und entsprechenden Dekodierblöcken *Up1, ..., Up4.* Sie sind durch eine *Basis* verbunden, die aus zwei aufeinanderfolgenden CNN-Blöcken besteht, zwischen denen Dropout verwendet wird[40]. Kodier- und Dekodierblöcke mit gleicher Auflösung sind über Skip-Verbindungen miteinander verbunden, um einen effizienten Informationsfluss durch das Netz zu ermöglichen. Diese Verbindungen erhöhen die Segmentierungsqualität.[41] In Anlehnung an Strohmann et al.[9] wird LeakyReLU anstelle der ursprünglichen ReLU als Aktivierungsfunktion für unsere U-Netz-Architektur verwendet.

Das FCNN besteht aus einer adaptiven Durchschnitts-Pooling-Schicht, gefolgt von zwei vollständig verknüpften Schichten mit ReLU-Aktivierungsfunktionen und endet mit einer linearen 2-Neuronen-Ausgabeschicht. Es prognostiziert die (normierte) Rissspitzenposition $y = (y_1, y_2) \in [-1,1]^2$ relativ zum Zentrum der Eingabedaten.

Die Figur 1 zeigt die schematische ParallelNets-Architektur. Die klassische U-Netz-Architektur[29] mit vier Kodierungsblöcken (engl. Encoder) (Down) und vier Dekodierungsblöcken (engl. Decoder) (Up), die durch einen Basisblock (Base) verbunden sind, ist in blau dargestellt. Kodier- und Dekodierblöcke der gleichen Ebene sind durch Skip-Verbindungen (graue gestrichelte Linien) verbunden. Die zusätzlichen Module der ParallelNets-Architektur sind in orange dargestellt und bestehen im Wesentlichen aus einem vollständig verbundenen neuronalen Netz (FCNN), das so trainiert wird, dass es die Position der Rissspitze in Form von normalisierten x- und y-Koordinaten ausgibt.

Während des Trainings wird der mittlere quadratische Fehler zwischen der Vorhersage und der tatsächlichen Rissspitzenposition $\hat{y} = (\hat{y}_1, \hat{y}_2) \in [-1,1]^2$, d.h.

$$\text{MSE}(y, \hat{y}) = \sqrt{(y_1 - \hat{y}_1)^2 + (y_2 - \hat{y}_2)^2} \tag{4}$$

berechnet.

Da das Segmentierungsproblem sehr unausgewogen ist, wird der Diceverlust[42] für die Segmentierungsausgabe verwendet:

$$\text{Dice}(z, \hat{z}) = 1 - \frac{2 \sum_{ij} z_{ij} \hat{z}_{ij} + \varepsilon}{\sum_{ij}(z_{ij} + \hat{z}_{ij}) + \varepsilon} \tag{5}$$

wobei $z = (z_{ij})$ mit $z_{ij} \in [0,1]$ die Segmentierungsausgabe (nach Sigmoid-Aktivierung) bezeichnet und $\hat{z} = (\hat{z}_{ij})$ für die Grundwahrheit steht. Hier ist $\varepsilon > 0$ eine kleine Konstante, die eingeführt wird, um den Randfall $z = \hat{z} \equiv 0$ abzudecken. Es wird $\varepsilon = 10^{-6}$ gewählt. Diese beiden Verluste werden dann zu einem (gewichteten) Gesamtverlust kombiniert

$$\text{Loss}_\omega(z, y, \hat{z}, \hat{y}) = \text{Dice}(z, \hat{z}) + \omega \, \text{MSE}(y, \hat{y}) \tag{6}$$

wobei $\omega \geq 0$ ein Gewichtungsfaktor ist, der den Trainingseinfluss des FCNN abstimmt. Wenn $\omega = 0$, ist der parallele FCNN-Zweig inaktiv und das *ParallelNets* wird auf das klassische U-Netz reduziert.

### 1.1 Datenerweiterung und Normalisierung

Zunächst werden alle Verschiebungsfelder $u_x$ und $u_y$ auf eine regelmäßige 256 x 256-Matrix interpoliert. Es wird eine Datennormalisierung in Kombination mit den folgenden aufeinanderfolgenden Schritten der Datenerweiterung des DIC-Datensatzes durchgeführt:

1. **Zufälliger Ausschnitt** der Eingabe mit einer Größe zwischen $120^2$ und $180^2$ Pixeln, wobei der linke Rand zufällig zwischen 10 und 30 Pixeln versetzt zur Ausgangsmatrix gewählt wird.
2. **Zufällige Drehung** um einen Winkel zwischen -10 und 10 Grad und anschließendes Ausschneiden des größtmöglichen Quadrats aus der gedrehten Eingabematrix.
3. **Zufälliger Flip** nach oben/unten mit einer Wahrscheinlichkeit von 50 %.

Anschließend werden die Eingabematrix und deren Grundwahrheit auf $224 \times 224$ Pixel mittels einer linearen Interpolation bzw. einer Interpolation durch den nächsten Nachbarn skaliert.

### 1.2 Datensätze und Datenaufteilung

Die Daten der fcp-Experimente wurden in die folgenden vier Datensätze aufgeteilt (der Begriff "Beobachtung" bezeichnet im Folgenden einzelne DIC-Aufnahmen, die unter einer einzigen Lastbedingung aufgenommen wurden):

1. Trainingsdatensatz $train_{160,4.7,right}$: Die von der rechten Seite der Probe erfassten Daten $S_{160,4.7}$ bestehend aus 835 annotierten Beobachtungen.
2. Validierungsdatensatz $val_{160,4.7,left}$: Die von der linken Seite der Probe erfassten Daten $S_{160,4.7}$ die ebenfalls aus 835 annotierten Beobachtungen bestehen.
3. Test-Datensatz $test_{160,2.0}$: Daten, die von der linken und rechten Seite des Probekörpers erfasst wurden $S_{160,2.0}$ mit $2 \times 14$ 10= 2820 Beobachtungen.
4. Test-Datensatz $test_{950,1.6}$: Daten, die von der linken und rechten Seite der Probe erfasst wurden $S_{950,1.6}$ mit $2 \times 20$ 4= 408 Beobachtungen.

Die Daten der linken Seite der Proben werden vorverarbeitet, um eine ähnliche Datenverteilung wie auf der rechten Seite zu gewährleisten. Beide Verschiebungsfelder $u_x$ und $u_y$ werden an der y-Achse gespiegelt und die x-Verschiebungen werden mit -1 multipliziert.

### 1.3 Training und Validierung des neuronalen Netzes

Nach der manuellen Optimierung der Architektur wurden die folgenden zwei Architekturen für das Training der neuronalen Netze ausgewählt:

- ParallelNets mit einem Verlustgewicht $\omega = 100$ und 64 anfänglichen Merkmalskanälen
- U-Netz (Verlustgewicht $\omega = 0$) mit 64 ursprünglichen Merkmalskanälen

Es wurden verschiedene Dropout-Wahrscheinlichkeiten $p \in [0, \frac{1}{2}]$ für beide Netze getestet, um die optimale Basisschicht auszuwählen. Die zufällig initialisierten Netze wurden mit dem Datensatz $train_{160,4.7,right}$ 500 Epochen lang mit dem Adam-Opti-mierer[43] mit einer Lernrate von $5 \times 10^{-4}$ und einer Stapelgröße von 16 trainiert. Nach jeder Trainingsepoche wurden die Netze auf $val_{160,4.7,left}$ evaluiert und schließlich wurde das Netz mit dem kleinsten Validierungs-Dice-Verlust ausgewählt.

### 1.4 Grad-CAM-Verfahren

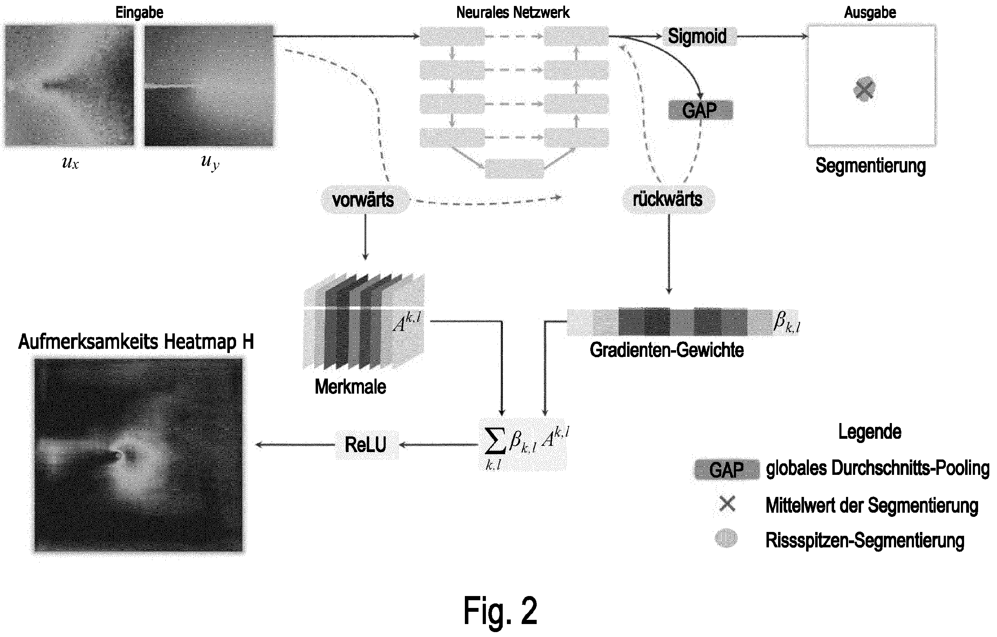

Wir verwenden die sogenannte Grad-CAM[24] Methode, um die Ergebnisse zu interpretieren. Diese Methode ermöglicht die Quantifizierung und Visualisierung der räumlichen Aufmerksamkeit von tiefen neuronalen Netzen, die für Segmentierungsaufgaben verwendet werden. Klassischerweise wird der Algorithmus verwendet, um schichtweise Aufmerksamkeits-Heatmaps zu erstellen[27,28] Die Figur 2 zeigt den Arbeitsablauf des Netzes und die Grad-CAM-Methode.

Um die Heatmap der Aufmerksamkeit $H(u)$ für Eingabeverschiebungen $u = (u_x, u_y)$ zu erhalten, sammeln wir zunächst die internen Merkmale von ausgewählten Schichten während des Vorwärtsdurchlaufs. Die Netzwerkausgabe $\Phi(u)$ (vor der Sigmoid-Aktivierung) wird dann über die Größe des Bildes gemittelt (GAP), um den skalaren Output-Score zu

erhalten

$$\varphi(u) = \frac{1}{N} \sum_{i,j} \Phi_{ij}(u). \qquad (7)$$

wobei $N$ die Anzahl der Pixel der Ausgabe angibt. Der Score wird durch das Netz zurückverfolgt, um die Gradienten zu berechnen $\frac{\partial \varphi}{\partial A^{kl}}$ in Bezug auf die Merkmalsaktivierungen $A^{kl}$ des $k$-ten Filters und $l$-te Schicht. Diese Gradienten werden dann im globalen Durchschnitt über ihre Breiten- und Höhendimensionen gepoolt (indiziert durch $i, j$), um die Gradienten-gewichte zu erhalten

$$\beta_{kl}(u) = \frac{1}{N_l} \sum_{i,j} \frac{\partial \varphi}{\partial A_{ij}^{kl}}(u), \qquad (8)$$

wobei $N_l$ die Anzahl der Pixel der Merkmale der jeweiligen Schicht bezeichnet. Diese Gewichte $\beta_{kl}$ erfassen die Wichtigkeit des Merkmals $A^{kl}$ für das Segmentierungsergebnis $\varphi$. Schließlich berechnen wir die Aufmerksamkeitskarte durch Anwendung der ReLU Aktivierungsfunktion auf die gradientengewichtete Summe der Merkmale:

$$H(u) = \text{ReLU}\left(\sum_{k,l} \beta_{kl}(u)\, A^{kl}(u)\right) \qquad (9)$$

Hier wird die Funktion $\text{ReLU}(x) = \max(x, 0)$ angewandt, um Bereiche hervorzuheben, die einen positiven Einfluss auf den Output-Score haben.

**REFERENZEN**

1. Tavares, S. M. O. & Castro, P. M. S. T. de. Ein Überblick über die Ermüdung von Flugzeugstrukturen. Fatigue Fract. Eng. Mater. Struct. 40, 1510-1529 (2017).

2. Tumanov, A. V., Shlyannikov, V. N. & Chandra Kishen, J. M. An automatic algorithm for mixed mode crack growth rate based on drop potential method. Int. J. Fatigue 81, 227-237 (2015).

3. Tarnowski, K. M., Nikbin, K. M., Dean, D. W. & Davies, C. M. A Unified Potential Drop Calibration Function for Common Crack Growth Specimens. Exp. Mech. 58, 1003-1013 (2018).

4. Mokhtarishirazabad, M., Lopez-Crespo, P., Moreno, B., Lopez-Moreno, A. & Zanganeh, M. Evaluation of crack-tip fields from DIC data: Eine parametrische Studie. Int. J. Fatigue 89, 11-19 (2016).

5. Roux, S., Réthoré, J. & Hild, F. Digital image correlation and fracture: an advanced technique for estimating stress intensity factors of 2D and 3D cracks. J. Phys. D: Appl. Phys. 42, 214004 (2009).

6. Becker, T. H., Mostafavi, M., Tait, R. B. & Marrow, T. J. An approach to calculate the J-integral by digital image correlation displacement field measurement. Fatigue Fract. Eng. Mater. Struct. 35, 971-984 (2012).

7. Besel, M. & Breitbarth, E. Advanced analysis of crack tip plastic zone under cyclic loading. Int. J. Fatigue 93, 92-108 (2016).

8. Breitbarth, E. & Besel, M. Energy based analysis of crack tip plastic zone of AA2024-T3 under cyclic loading. Int. J. Fatigue 100, 263-273 (2017).

9. Strohmann, T., Starostin-Penner, D., Breitbarth, E. & Requena, G. Automatic detection of fatigue crack paths using digital image correlation and convolutional neural networks. Fatigue Fract. Eng. Mater. Struct. 44, 1336-1348 (2021).

10. Réthoré, J. Automatic crack tip detection and stress intensity factors estimation of curved cracks from digital images. Int. J. Numer. Meth. Engng. 103, 516-534 (2015).

11. Zhao, J., Sang, Y. & Duan, F. The state of the art of two-dimensional digital image correlation computational method. Eng. Rep. 1 (2019).

12. Krizhevsky, A., Sutskever, I. & Hinton, G. E. ImageNet classification with deep convolutional neural networks. Commun. ACM 60, 84-90 (2017).

13. Girshick, R., Donahue, J., Darrell, T. & Malik, J. Rich Feature Hierarchies for Accurate Object Detection and Semantic Segmentation. IEEE Trans. Pattern Anal. Mach. Intell. 38, 142-158 (2016).

14. Shelhamer, E., Long, J. & Darrell, T. Fully Convolutional Networks for Semantic Segmentation. IEEE Trans. Pattern Anal. Mach. Intell. 39, 640-651 (2017).

15. Schmidt, J., Marques, M. R. G., Botti, S. & Marques, M. A. L. Recent advances and applications of machine learning in solid-state materials science. npj Comput. Mater. 5 (2019).

16. Aldakheel, F., Satari, R. & Wriggers, P. Feed-Forward Neural Networks for Failure Mechanics Problems. Appl. Sci. 11, 6483 (2021).

17. Cha, Y.-J., Choi, W. & Büyüköztürk, O. Deep Learning-Based Crack Damage Detection Using Convolutional Neural Networks. Comput. Aided Civ. Infrastructure Eng. 32, 361-378 (2017).

18. Raissi, M., Perdikaris, P. & Karniadakis, G. E. Physics-informed neural networks: A deep learning framework for solving forward and inverse problems involving nonlinear partial differential equations. J. Comput. Phys. 378, 686-707 (2019).

19. Chen, J. & Liu, Y. Fatigue modeling using neural networks: a comprehensive review (Authorea, 2021).

20. Barredo Arrieta, A. et al. Explainable Artificial Intelligence (XAI): Konzepte, Taxonomien, Möglichkeiten und Herausforderungen für eine verantwortungsvolle KI. Inf. Fusion 58, 82-115 (2020).

21. Hendricks, L. A., Burns, K., Saenko, K., Darreil, T. & Rohrbach, A. Women Also Snowboard: Overcoming Bias in Captioning Models. In Computer Vision - ECCV 2018, edited by V. Ferrari, M. Hebert, C. Sminchisescu & Y. Weiss (Springer International Publishing, Cham, 2018), Vol. 11207, pp. 793-811.

22. Montavon, G., Samek, W. & Müller, K.-R. Methoden zum Interpretieren und Verstehen von tiefen neuronalen Netzen. Digit. Signal Process. 73, 1-15 (2018).

23. Zhang, Q. & Zhu, S. Visual interpretability for deep learning: a survey. Frontiers Inf. Technol. Electronic Eng. 19, 27-39 (2018).

24. Selvaraju, R. R. et al. Grad-CAM: Visuelle Erklärungen von tiefen Netzen über Gradienten-basierte Lokalisierung. Int. J. Comput. Vis. 128, 336-359 (2020).

25. Zhou, B., Khosla, A., Lapedriza, A., Oliva, A. & Torralba, A. Learning Deep Features for Discriminative Localization. In 2016 IEEE Conference on Computer Vision and Pattern Recognition (CVPR) (IEEE62016), S. 2921-2929.

26. Vinogradova, K., Dibrov, A. & Myers, G. Towards Interpretable Semantic Segmentation via Gradient-Weighted Class Activation Mapping (Student Abstract). AAAI 34, 13943-13944 (2020).

27. Natekar, P., Kori, A. & Krishnamurthi, G. Demystifying Brain Tumor Segmentation Networks: Interpretierbarkeit und Unsicherheitsanalyse. Front. Comput. Neurosci. 14, 6 (2020).

28. Saleem, H., Shahid, A. R. & Raza, B. Visual interpretability in 3D brain tumor segmentation network. Comput. Biol.

Med. 133, 104410 (2021).

29.Ronneberger, O., Fischer, P. & Brox, T. U-Net: Convolutional Networks for Biomedical Image Segmentation. In Medical Image Computing and Computer-Assisted Intervention - MICCAI 2015, edited by N. Navab, J. Hornegger, W. M. Wells & A. F. Frangi (Springer International Publishing, Cham, 2015), Vol. 9351, pp. 234-241.

30.Dursun, T. & Soutis, C. Recent developments in advanced aircraft aluminium alloys. Mater. Des. 56, 862-871 (2014).

31.Breitbarth, E., Strohmann, T. & Requena, G. High stress fatigue crack propagation in thin AA2024-T3 sheet material. Fatigue Fract. Eng. Mater. Struct. 43, 2683-2693 (2020).

32.Schwalbe, K.-H. & Hellmann, D. Application of the Electrical Potential Method to Crack Length Measurements Using Johnson's Formula. J. Test. Eval. 9, 218 (1981).

33.He, H. & Garcia, E. A. Learning from Imbalanced Data. IEEE Trans. Knowl. Data Eng. 21, 1263-1284 (2009).

34.Lathuilière, S., Mesejo, P., Alameda-Pineda, X. & Horaud, R. A Comprehensive Analysis of Deep Regression. IEEE Trans. Pattern Anal. Mach. Intell. 42, 2065-2081 (2020).

35. Fischer, P., Dosovitskiy, A. & Brox, T. Image Orientation Estimation with Convolutional Networks. In Pattern Recognition, edited by J. Gall, P. Gehler & B. Leibe (Springer International Publishing, Cham, 2015), Vol. 9358, pp. 368-378.

36.Liu, X., Liang, W., Wang, Y., Li, S. & Pei, M. 3D head pose estimation with convolutional neural network trained on synthetic images. In 2016 IEEE International Conference on Image Processing (ICIP) (IEEE92016), S. 1289-1293.

37.García-Ordás, M. T., Benitez-Andrades, J. A., Garcia-Rodriguez, I., Benavides, C. & Alaiz-Moretón, H. Detecting Respiratory Pathologies Using Convolutional Neural Networks and Variational Autoencoders for Unbalancing Data. Sensors 20 (2020).

38.Zhu, M. & Wu, Y. A Parallel Convolutional Neural Network for Pedestrian Detection. Electronics 9, 1478 (2020).

39. Murugesan, B. et al. Psi-Net: Shape and Boundary aware joint multi-task deep network for medical image segmentation. Jährliche internationale Konferenz der IEEE Engineering in Medicine and Biology Society. IEEE Engineering in Medicine and Biology Society. Annual International Conference 2019, 7223-7226 (2019).

40.Srivastava, N., Hinton, G., Krizhevsky, A., Sutskever, I. & Salakhutdinov, R. Dropout: Ein einfacher Weg, um neuronale Netze vor Überanpassung zu bewahren. J. Mach. Learn. Res. 15, 1929-1958 (2014).

41.Maier, A., Syben, C., Lasser, T. & Riess, C. A gentle introduction to deep learning in medical image processing. Z. Med. Phys. 29, 86-101 (2019).

42.Sudre, C. H., Vercauteren, T., Ourselin, S. & Jorge Cardoso, M. Generalised Dice Overlap as a Deep Learning Loss Function for Highly Unbalanced Segmentations. In Deep learning in medical image analysis and multimodal learning for clinical decision support - DLMIA 2017, ML-CDS 2017, edited by M. J. Cardoso & T. Arbel (Springer, Cham, 2017), pp. 240-248.

43.Kingma, D. P. & Ba, J. Adam: A Method for Stochastic Optimization. 3rd International Conference on Learning Representations, ICLR 2015 - Conference Track Proceedings, 1-15 (2015).

44. Williams, M. L. On the Stress Distribution at the Base of a Stationary Crack. J. Appl. Mech. 24, 109-114 (1957).

45. Khor, W. A CTOD equation based on the rigid rotational factor with the consideration of crack tip stunting due to strain hardening for SEN(B). Fatigue Fract. Eng. Mater. Struct. 42, 1622-1630 (2019).

46. Breitbarth et al., Frattura ed Integrità Strutturale 2019;13: 12-25: Determination of Stress Intensity Factors and J integral based on Digital Image Corrleation

Gemäß einem weiteren Aspekt betrifft die vorliegende Erfindung ein Prüfsystem umfassend eine Prüfmaschine zur Aufprägung einer definierten Last oder eines Lastregimes auf einen zu untersuchenden Körper, eine ortsfeste makroskopische Bildaufnahmeeinrichtung zur Generierung von makroskopischen Aufnahmen des zu untersuchenden Körpers, eine zweite ausrichtbare mikroskopische Bildaufnahmeeinrichtung zur Generierung mindestens einer mikroskopischen Aufnahme des zu untersuchenden Körpers und ein Computersystem, das dazu ausgebildet ist, das Verfahren gemäß dem ersten Aspekt der vorliegenden Erfindung auszuführen wobei es sich bei der ersten Bildaufnahmeeinrichtung (3) um ein System zur digitalen Bildkorrelation in zwei oder drei Dimensionen handelt.

Bei der mikroskopischen Bildaufnahmeeinrichtung kann es sich beispielsweise um ein Lichtmikroskop und eine daran optisch angeschlossene optische Bildaufnahmeeinrichtung, wie beispielsweise eine Industriekamera oder eine Spiegelreflexkamera, handeln.

Bei der der zweiten Bildaufnahmeeinrichtung kann es sich um ein System zur digitalen Bildkorrelation in zwei oder drei Raumdimensionen handeln.

Gemäß einem weiteren Aspekt der vorliegenden Erfindung betrifft diese ein Computerprogrammprodukt umfassend Befehle, die bei der Ausführung des Programms durch ein Prüfsystem dieses veranlassen, die Verfahrensschritte gemäß dem ersten Aspekt der vorliegenden Erfindung auszuführen.

Weiterhin betrifft die vorliegende Erfindung gemäß einem weiteren Aspekt die Verwendung des Verfahrens gemäß erstem Aspekt der vorliegenden Erfindung zur Erkennung der Schädigung bzw. des Rissfortschritts in einem Bauteil, insbesondere ein Bauteil eines Luftfahrzeuges.

**Patentansprüche**

1. Computerimplementiertes Verfahren für die Schädigungserkennung in einem zu untersuchenden Körper (10), umfassend die Schritte:

   a) Generieren mindestens einer ersten makroskopischen Referenzaufnahme (30) mittels einer ersten ortsfesten Bildaufnahmeeinrichtung (3) gebildet durch ein System zur digitalen Bildkorrelation in zwei oder drei Dimensionen und einer Mehrzahl von mikroskopischen Referenzaufnahmen (50) mittels einer zweiten positionierbaren Bildaufnahmeeinrichtung (5) mindestens einer zu untersuchenden Oberfläche (10s) des unbelasteten zu untersuchenden Körpers (10);
   b) Aufprägen einer Last oder eines Lastregimes auf den Körper (10);
   c) Generieren mindestens einer makroskopischen Aufnahme (30) der mindestens einen zu untersuchenden Oberfläche (10s) des Körpers (10) unter anliegender Last gemäß Verfahrensschritt b) und/oder nach Entlastung über die erste ortsfeste Bildaufnahmeeinrichtung (3);
   d) Berechnen der aktuellen Lokalisierung mindestens eines Schädigungsbereiches und/oder mindestens eines Bereiches einer Rissspitze im Körper (10) unter Verwendung eines trainierten neuronalen Netzwerkes für die Schädigungserkennung unter Nutzung von zwei- oder dreidimensionalen Verschiebungsfeldern ermittelt durch das System zur digitalen Bildkorrelation;
   e) Ausrichten der zweiten positionierbaren Bildaufnahmeeinrichtung (5) anhand des mindestens einen Schädigungsbereiches des Körpers (10) und/oder des mindestens einen Bereiches einer Rissspitze im Körper (10) gemäß Verfahrensschritt d) und Generieren mindestens einer mikroskopischen Aufnahme (50) des mindestens einen Schädigungsbereiches mittels der zweiten Bildaufnahmeeinrichtung (5) unter anliegender Last gemäß Verfahrensschritt b) und/oder nach Entlastung; und
   f) Optionales Wiederholen der Verfahrensschritte b) bis e) um eine beliebige ganzzahlige Anzahl an Wiederholungen, wobei im Verfahrensschritt b) eine von der zuvor aufgeprägten Last abweichende Last oder ein abweichendes Lastregime aufgeprägt wird.

2. Verfahren nach Anspruch 1, wobei das Verfahren vor dem Verfahrensschritt b) weiterhin den Schritt umfasst:
   a1) Kalibrieren der Positionierung der zweiten Bildaufnahmeeinrichtung (5) durch Abgleichen der aktuellen Raumlage der zweiten Bildaufnahmeeinrichtung (5) gegenüber der ersten ortsfesten Bildaufnahmeeinrichtung (3).

3. Verfahren nach Anspruch 1 oder 2, wobei im Verfahrensschritt a) makroskopische Referenzaufnahmen (30) der gesamten Oberfläche des unbelasteten zu untersuchenden Körpers (10) mittels einer ersten ortsfesten Bildaufnahmeeinrichtung (3) und eine Mehrzahl von mikroskopischen Referenzaufnahmen (50) der gesamten Oberfläche des unbelasteten zu untersuchenden Körpers (10) mittels einer zweiten positionierbaren Bildaufnahmeeinrichtung (5) generiert werden.

4. Verfahren nach einem der vorausgehenden Ansprüche, wobei das Verfahren in dem Schritt c) zusätzlich den Schritt umfasst:

e1) optisches Fokussieren der zweiten Bildaufnahmeeinrichtung (5) auf dem Bereich der Schädigung bzw. der Rissspitze.

5. Verfahren nach einem der vorausgehenden Ansprüche, wobei das Verfahren weiter umfasst:

- Berechnen des Wechselwirkungsintegrals bzw. J-Integrals entlang eines Integrationspfades um eine Rissspitze.

6. Verfahren nach einem der vorausgehenden Ansprüche, wobei das Verfahren weiter umfasst:

- Berechnen des ersten Terms der Williams-Reihe der Spannungsintensitätsfaktoren und/oder Berechnen Terme höherer Ordnung der Williams-Reihe, wie beispielsweise den Term zweiter Ordnung, T-Spannung.

7. Verfahren nach einem der vorausgehenden Ansprüche, wobei im Verfahrensschritt c) die generierten makroskopischen und mikroskopischen Aufnahmen zusammen mit den wesentlichen Verfahrensparametern zu dem Zeitpunkt der Aufnahme der Bilder abgelegt wird, wobei die Verfahrensparameter mindestens ein Element ausgewählt aus der Gruppe von: aktuell aufgeprägte Last, aufgeprägte Lastzyklen bzw. Lastregime, aktuelle Position der Prüfmaschine, weitere Messparameter wie erfasste Dehnungen zusätzlich aufgebrachter Dehnungsmessstreifen umfassen.

8. Prüfsystem umfassend:

- eine Prüfmaschine (9) zur Aufprägung einer definierten Last oder eines Lastregimes auf einen zu untersuchenden Körper (10);
- eine erste ortsfeste makroskopische Bildaufnahmeeinrichtung (3) zur Generierung von makroskopischen Aufnahmen (30) des zu untersuchenden Körpers (10);
- eine zweite ausrichtbare mikroskopische Bildaufnahmeeinrichtung (5) zur Generierung mindestens einer mikroskopischen Aufnahme (50) des zu untersuchenden Körpers (10);
- und ein Computersystem (11), das dazu ausgebildet ist, das Verfahren nach einem der vorausgehenden Ansprüche 1 bis 7 auszuführen,

wobei es sich bei der ersten Bildaufnahmeeinrichtung (3) um ein System zur digitalen Bildkorrelation in zwei oder drei Dimensionen handelt.

9. Prüfsystem nach Anspruch 8, **dadurch gekennzeichnet, dass** die mikroskopische Bildaufnahmeeinrichtung (5) ein Lichtmikroskop und eine daran optisch angeschlossene optische Aufnahmeeinrichtung, wie beispielsweise eine Industriekamera oder Spiegelreflexkamera, umfasst.

10. Prüfsystem nach Anspruch 8 oder 9, wobei es sich bei der zweiten Bildaufnahmeeinrichtung (5) um ein System zur digitalen Bildkorrelation in zwei oder drei Dimensionen handelt.

11. Computerprogrammprodukt, umfassend Befehle, die bei der Ausführung des Programms durch ein Prüfsystem nach Anspruch 8 dieses veranlassen, das Verfahren nach einem der Ansprüche 1 bis 7 auszuführen.

12. Computerlesbares Speichermedium, umfassend Befehle, die bei der Ausführung durch ein Prüfsystem nach Anspruch 8 dieses veranlassen, das Verfahren nach einem der Ansprüche 1 bis 7 auszuführen.

13. Verwendung des Verfahrens nach einem der Ansprüche 1 bis 7 zur Erkennung des Rissfortschrittes bzw. der Schädigung in einem Bauteil.

**Claims**

1. A computer-implemented method for damage detection in a body to be examined (10), comprising the steps of:

a) generating at least one first macroscopic reference image (30) by means of a first stationary image recording device (3) formed by a system for digital image correlation in two or three dimensions and a plurality of microscopic reference images (50) by means of a second positionable image recording device (5) of at least one surface (10s) to be examined of the unloaded body (10) to be examined;

b) imposing a load or load regime on the body (10);

c) generating at least one macroscopic image (30) of the at least one surface (10s) to be examined of the body (10) under applied load according to method step b) and/or after unloading by means of the first stationary image recording device (3);

d) calculating the current localization of at least one damage area and/or at least one area of a crack tip in the body (10) using a trained neural network for damage detection utilizing two- or three-dimensional displacement fields determined by the system for digital image correlation;

e) aligning the second positionable image recording device (5) on the basis of the at least one damage area of the body (10) and/or the at least one area of a crack tip in the body (10) according to method step d) and generating at least one microscopic image (50) of the at least one damage area by means of the second image recording device (5) under applied load according to method step b) and/or after unloading; and

f) optionally repeating the method steps b) to e) by any integer number of repetitions, wherein in method step b) a load or load regime is imposed that differs from the previously imposed load.

2. The method according to claim 1, the method further comprising the following step prior to method step b):
a1) calibrating the positioning of the second image recording device (5) by matching the current spatial position of the second image recording device (5) relative to the first stationary image recording device (3).

3. The method according to claim 1 or 2, wherein in method step a) macroscopic reference images (30) of the entire surface of the unloaded body (10) to be examined are generated by means of a first stationary image recording device (3) and a plurality of microscopic reference images (50) of the entire surface of the unloaded body (10) to be examined are generated by means of a second positionable image recording device (5).

4. The method according to any one of the preceding claims, the method additionally comprising the following step in method step c):
e1) optically focusing the second image recording device (5) on the area of the damage or the crack tip, respectively.

5. The method according to one of the preceding claims, the method further comprising:

   - calculating the interaction integral or J-integral along an integration path around a crack tip.

6. The method according to one of the preceding claims, the method further comprising:

   - calculating the first term of the Williams series of stress intensity factors and/or calculating higher order terms of the Williams series, such as the second order term, T-stress.

7. The method according to one of the preceding claims, wherein in method step c) the generated macroscopic and microscopic images are stored together with the essential method parameters at the time of recording the images, wherein the method parameters comprise at least one element selected from the group of: currently imposed load, imposed load cycles or load regimes, current position of the testing machine, further measurement parameters such as recorded strains of additionally applied strain gauges.

8. A test system, comprising:

   - a testing machine (9) for imposing a defined load or load regime on a body (10) to be examined;
   - a first stationary macroscopic image recording device (3) for generating macroscopic images (30) of the body (10) to be examined;
   - a second alignable microscopic image recording device (5) for generating at least one microscopic image (50) of the body (10) to be examined;
   - and a computer system (11) adapted to perform the method according to any one of the preceding claims 1 to 7,

   wherein the first image recording device (3) is a system for digital image correlation in two or three dimensions.

9. A test system according to claim 8, **characterized in that** the microscopic image recording device (5) comprises a light microscope and an optical recording device optically connected thereto, such as an industrial camera or single-lens reflex camera.

**10.** The test system according to claim 8 or 9, wherein the second image recording device (5) is a system for digital image correlation in two or three dimensions.

**11.** A computer program product comprising instructions which, when the program is executed by a test system according to claim 8, cause the test system to perform the method according to any one of claims 1 to 7.

**12.** A computer-readable storage medium comprising instructions which, when executed by a test system according to claim 8, cause the test system to perform the method according to any one of claims 1 to 7.

**13.** Use of the method according to any one of claims 1 to 7 for detecting crack propagation or damage in a component.

**Revendications**

**1.** Procédé informatisé pour la détection de dommages dans un corps à étudier (10), comprenant les étapes:

a) génération d'au moins un premier enregistrement de référence macroscopique (30) au moyen d'un premier dispositif d'enregistrement d'images fixe (3) formé par un système pour la corrélation d'images numérique en deux ou trois dimensions et d'une pluralité d'enregistrements de référence microscopiques (50) au moyen d'un deuxième dispositif d'enregistrement d'images positionnable (5) d'au moins une surface à étudier (10s) du corps à étudier (10) non chargé;
b) application d'une charge ou d'un régime de charge sur le corps (10);
c) génération d'au moins un enregistrement macroscopique (30) de la au moins une surface à étudier (10s) du corps (10) sous charge appliquée selon l'étape de procédé b), et/ou après décharge via le premier dispositif d'enregistrement d'images fixe (3);
d) calcul de la localisation actuelle d'au moins une zone endommagée et/ou d'au moins une zone d'une extrémité de fissure dans le corps (10) à l'aide d'un réseau neuronal entraîné pour la détection de dommages utilisant des champs de déplacement bidimensionnels ou tridimensionnels déterminés par le système pour la corrélation d'images numérique;
e) alignement du deuxième dispositif d'enregistrement d'images positionnable (5) à l'aide de la au moins une zone endommagée du corps (10) et/ou de la au moins une zone d'une extrémité de fissure dans le corps (10) selon l'étape de procédé d) et génération d'au moins un enregistrement microscopique (50) de la au moins une zone endommagée à l'aide du deuxième dispositif d'enregistrement d'images (5) sous charge appliquée selon l'étape de procédé b) et/ou après décharge; et
f) répétition éventuelle des étapes de procédé b) à e) d'un nombre entier quelconque de répétitions, où à l'étape de procédé b) une charge ou un régime de charge différent de la charge précédemment appliquée est appliqué.

**2.** Procédé selon la revendication 1, dans lequel le procédé comprend en outre avant l'étape de procédé b) l'étape:
a1) étalonnage du positionnement du deuxième dispositif d'enregistrement d'images (5) par alignement de la position spatiale actuelle du deuxième dispositif d'enregistrements d'images (5) par rapport au premier dispositif d'enregistrement d'images fixe (3).

**3.** Procédé selon la revendication 1 ou 2, dans lequel, à l'étape de procédé a), des enregistrements de référence macroscopiques (30) de la surface entière du corps à étudier (10) non chargé sont générés à l'aide d'un premier dispositif d'enregistrement d'images fixe (3) et une pluralité d'enregistrements de référence microscopiques (50) de la surface entière du corps à étudier (10) non chargé sont générés à l'aide d'un deuxième dispositif d'enregistrement d'images positionnable (5).

**4.** Procédé selon l'une des revendications précédentes, dans lequel le procédé comprend en outre à l'étape c) l'étape:
e1) focalisation optique du deuxième dispositif d'enregistrement d'images (5) sur la zone du dommage ou de l'extrémité de fissure.

**5.** Procédé selon l'une des revendications précédentes, dans lequel le procédé comprend en outre:

- le calcul de l'intégrale d'interaction ou de l'intégrale J le long d'un chemin d'intégration autour d'une extrémité de fissure.

**6.** Procédé selon l'une des revendications précédentes, dans lequel le procédé comprend en outre:

- le calcul du premier terme de la série de Williams des facteurs d'intensité de contrainte et/ou le calcul de termes d'ordre supérieur de la série de Williams, comme par exemple le terme du deuxième ordre, contrainte T.

7. Procédé selon l'une des revendications précédentes, dans lequel, à l'étape de procédé c), les enregistrements macroscopiques et microscopiques générés sont déposés avec les paramètres de procédé essentiels au moment de l'enregistrement des images, où les paramètres comprennent au moins un élément choisi dans le groupe de: la charge appliquée actuellement, les cycles ou les régimes de charge appliqués, la position actuelle de la machine d'essai, d'autres paramètres de mesure tels que les déformations détectées par des jauges de contrainte appliquées additionnelles.

8. Système d'essai comprenant:

- une machine d'essai (9) pour appliquer une charge ou un régime de charge défini sur un corps à étudier (10);
- un premier dispositif d'enregistrement d'images macroscopiques fixe (3) pour générer des enregistrements macroscopiques (30) du corps à étudier (10);
- un deuxième dispositif d'enregistrement d'images microscopiques (5) pouvant être aligné pour générer au moins un enregistrement microscopique (50) du corps à étudier (10);
- et un système informatique (11) qui est configuré pour exécuter le procédé selon l'une des revendications 1 à 7 précédentes,

où le premier dispositif d'enregistrement d'images (3) est un système pour la corrélation d'images numérique en deux ou trois dimensions.

9. Système d'essai selon la revendication 8, **caractérisé en ce que** le dispositif d'enregistrement d'images microscopiques (5) comprend un microscope optique et un dispositif d'enregistrement optique connecté optiquement à celui-ci, comme par exemple une caméra industrielle ou un appareil photo reflex.

10. Système d'essai selon la revendication 8 ou 9, dans lequel le deuxième dispositif d'enregistrement d'images (5) est un système pour la corrélation d'images numérique en deux ou trois dimensions.

11. Produit programme informatique comprenant des instructions qui, lors de l'exécution du programme par un système d'essai selon la revendication 8 amènent celui-ci à exécuter le procédé selon l'une des revendications 1 à 7.

12. Support de stockage lisible par ordinateur comprenant des instructions qui, lors de l'exécution par un système d'essai selon la revendication 8 amènent celui-ci à exécuter le procédé selon l'une des revendications 1 à 7.

13. Utilisation du procédé selon l'une des revendications 1 à 7 pour détecter la propagation de fissures ou les dommages dans un composant.

Fig. 1

EP 4 231 233 B1

**Fig. 2**

Risslänge, Risspfad, und Position des Risses bzw.der Rissspitze als Funktion der Zeit, Rissspitzenbeanspruchung(J-Integral, CTOD), Machine Learning(un- /supervised),Korrelation zwischen lokaler mechanischer Beanspruchung und Mikrostruktur, Validierung von Simulationsergebnissen

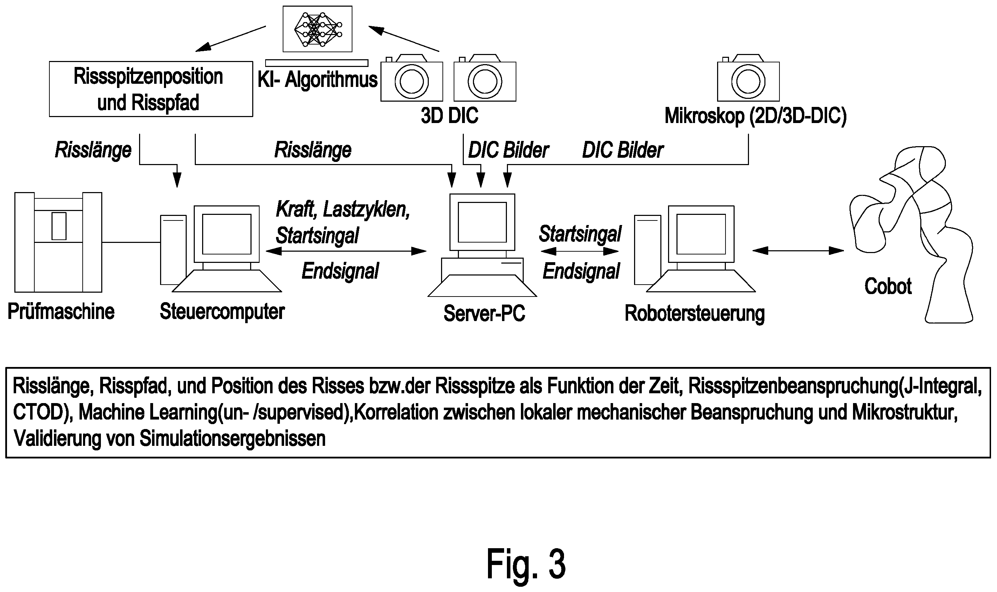

Fig. 3

EP 4 231 233 B1

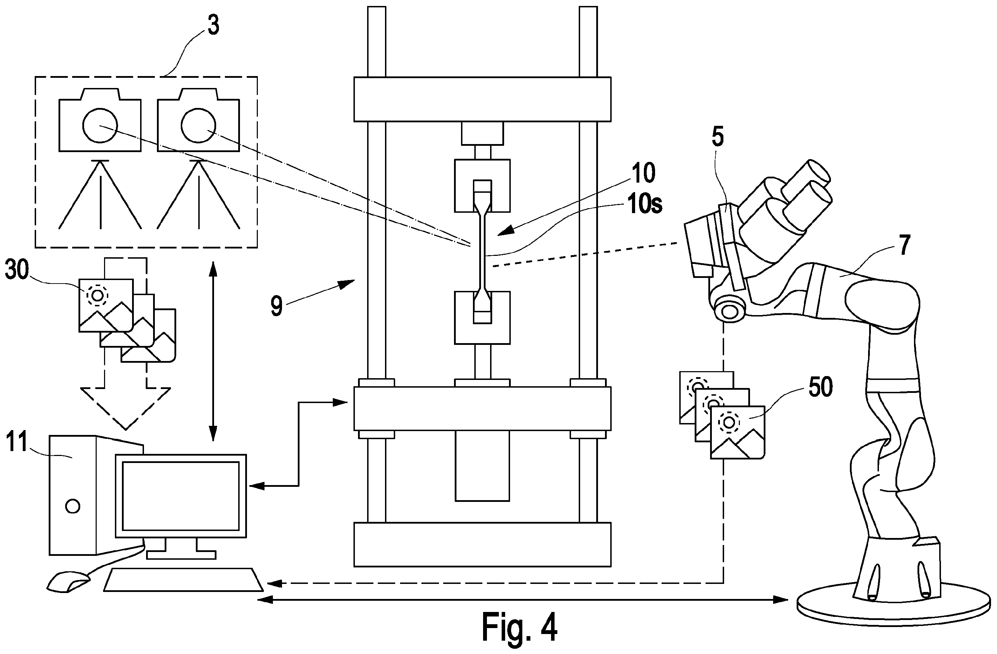

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **AUS MELCHING D et al.** *Explainable AI for precise fatigue crack detection*, 07 September 2021
- **TAVARES, S. M. O** ; **CASTRO, P. M. S. T**. Ein Überblick über die Ermüdung von Flugzeugstrukturen. *Fatigue Fract. Eng. Mater. Struct.*, 2017, vol. 40, 1510-1529
- **TUMANOV, A. V.** ; **SHLYANNIKOV, V. N.** ; **CHANDRA KISHEN, J. M.** An automatic algorithm for mixed mode crack growth rate based on drop potential method. *Int. J. Fatigue*, 2015, vol. 81, 227-237
- **TARNOWSKI, K. M.** ; **NIKBIN, K. M.** ; **DEAN, D. W.** ; **DAVIES, C. M. A**. Unified Potential Drop Calibration Function for Common Crack Growth Specimens. *Exp. Mech.*, 2018, vol. 58, 1003-1013
- **MOKHTARISHIRAZABAD, M** ; **LOPEZ-CRESPO, P** ; **MORENO, B** ; **LOPEZ-MORENO, A** ; **ZANGANEH, M**. Evaluation of crack-tip fields from DIC data: Eine parametrische Studie. *Int. J. Fatigue*, 2016, vol. 89, 11-19
- **ROUX, S** ; **RÉTHORÉ, J** ; **HILD, F**. Digital image correlation and fracture: an advanced technique for estimating stress intensity factors of 2D and 3D cracks. *J. Phys. D: Appl. Phys.*, 2009, vol. 42, 214004
- **BECKER, T. H.** ; **MOSTAFAVI, M** ; **TAIT, R. B.** ; **MARROW, T. J**. An approach to calculate the J-integral by digital image correlation displacement field measurement. *Fatigue Fract. Eng. Mater. Struct.*, 2012, vol. 35, 971-984
- **BESEL, M** ; **BREITBARTH, E**. Advanced analysis of crack tip plastic zone under cyclic loading. *Int. J. Fatigue*, 2016, vol. 93, 92-108
- **BREITBARTH, E** ; **BESEL, M**. Energy based analysis of crack tip plastic zone of AA2024-T3 under cyclic loading. *Int. J. Fatigue*, 2017, vol. 100, 263-273
- **STROHMANN, T** ; **STAROSTIN-PENNER, D** ; **BREITBARTH, E** ; **REQUENA, G**. Automatic detection of fatigue crack paths using digital image correlation and convolutional neural networks. *Fatigue Fract. Eng. Mater. Struct.*, 2021, vol. 44, 1336-1348
- **RÉTHORÉ, J**. Automatic crack tip detection and stress intensity factors estimation of curved cracks from digital images. *Int. J. Numer. Meth. Engng.*, 2015, vol. 103, 516-534
- **ZHAO, J** ; **SANG, Y** ; **DUAN, F**. The state of the art of two-dimensional digital image correlation computational method. *Eng. Rep.*, 2019, vol. 1
- **KRIZHEVSKY, A** ; **SUTSKEVER, I** ; **HINTON, G. E.** ImageNet classification with deep convolutional neural networks. *Commun. ACM*, 2017, vol. 60, 84-90
- **GIRSHICK, R** ; **DONAHUE, J** ; **DARRELL, T** ; **MALIK, J**. Rich Feature Hierarchies for Accurate Object Detection and Semantic Segmentation. *IEEE Trans. Pattern Anal. Mach. Intell.*, 2016, vol. 38, 142-158
- **SHELHAMER, E** ; **LONG, J** ; **DARRELL, T**. Fully Convolutional Networks for Semantic Segmentation. *IEEE Trans. Pattern Anal. Mach. Intell.*, 2017, vol. 39, 640-651
- **SCHMIDT, J** ; **MARQUES, M. R. G.** ; **BOTTI, S** ; **MARQUES, M. A. L.** Recent advances and applications of machine learning in solid-state materials science. *npj Comput. Mater.*, 2019, vol. 5
- **ALDAKHEEL, F** ; **SATARI, R** ; **WRIGGERS, P**. Feed-Forward Neural Networks for Failure Mechanics Problems. *Appl. Sci.*, 2021, vol. 11, 6483
- **CHA, Y.-J.** ; **CHOI, W** ; **BÜYÜKÖZTÜRK, O**. Deep Learning-Based Crack Damage Detection Using Convolutional Neural Networks. *Comput. Aided Civ. Infrastructure Eng.*, 2017, vol. 32, 361-378
- **RAISSI, M** ; **PERDIKARIS, P** ; **KARNIADAKIS, G. E.** Physics-informed neural networks: A deep learning framework for solving forward and inverse problems involving nonlinear partial differential equations. *J. Comput. Phys.*, 2019, vol. 378, 686-707
- **CHEN, J** ; **LIU, Y**. *Fatigue modeling using neural networks: a comprehensive review*, 2021
- **BARREDO ARRIETA, A et al.** Explainable Artificial Intelligence (XAI): Konzepte, Taxonomien, Möglichkeiten und Herausforderungen für eine verantwortungsvolle KI. *Inf. Fusion*, 2020, vol. 58, 82-115
- Women Also Snowboard: Overcoming Bias in Captioning Models. **HENDRICKS, L. A.** ; **BURNS, K** ; **SAENKO, K** ; **DARREIL, T** ; **ROHRBACH, A**. In Computer Vision - ECCV 2018. Springer International Publishing, 2018, vol. 11207, 793-811
- **MONTAVON, G** ; **SAMEK, W** ; **MÜLLER, K.-R.** Methoden zum Interpretieren und Verstehen von tiefen neuronalen Netzen. *Digit. Signal Process.*, 2018, vol. 73, 1-15
- **ZHANG, Q** ; **ZHU, S**. Visual interpretability for deep learning: a survey. *Frontiers Inf. Technol. Electronic Eng.*, 2018, vol. 19, 27-39

- **SELVARAJU, R. R. et al.** Grad-CAM: Visuelle Erklärungen von tiefen Netzen über Gradienten-basierte Lokalisierung. *Int. J. Comput. Vis.*, 2020, vol. 128, 336-359
- **ZHOU, B** ; **KHOSLA, A** ; **LAPEDRIZA, A** ; **OLIVA, A** ; **TORRALBA, A**. Learning Deep Features for Discriminative Localization. *In 2016 IEEE Conference on Computer Vision and Pattern Recognition (CVPR) (IEEE62016)*, S2921-2929
- **VINOGRADOVA, K** ; **DIBROV, A** ; **MYERS, G**. Towards Interpretable Semantic Segmentation via Gradient-Weighted Class Activation Mapping (Student Abstract). *AAAI*, 2020, vol. 34, 13943-13944
- **NATEKAR, P** ; **KORI, A** ; **KRISHNAMURTHI, G**. Demystifying Brain Tumor Segmentation Networks: Interpretierbarkeit und Unsicherheitsanalyse. *Front. Comput. Neurosci.*, 2020, vol. 14, 6
- **SALEEM, H** ; **SHAHID, A. R.** ; **RAZA, B**. Visual interpretability in 3D brain tumor segmentation network. *Comput. Biol. Med.*, 2021, vol. 133, 104410
- U-Net: Convolutional Networks for Biomedical Image Segmentation. **RONNEBERGER, O** ; **FISCHER, P** ; **BROX, T**. Medical Image Computing and Computer-Assisted Intervention - MICCAI 2015. Springer International Publishing, 2015, vol. 9351, 234-241
- **DURSUN, T** ; **SOUTIS, C**. Recent developments in advanced aircraft aluminium alloys. *Mater. Des.*, 2014, vol. 56, 862-871
- **BREITBARTH, E** ; **STROHMANN, T** ; **REQUENA, G**. High stress fatigue crack propagation in thin AA2024-T3 sheet material. *Fatigue Fract. Eng. Mater. Struct.*, 2020, vol. 43, 2683-2693
- **SCHWALBE, K.-H.** ; **HELLMANN, D**. Application of the Electrical Potential Method to Crack Length Measurements Using Johnson's Formula. *J. Test. Eval.*, 1981, vol. 9, 218
- **HE, H** ; **GARCIA, E. A.** Learning from Imbalanced Data. *IEEE Trans. Knowl. Data Eng.*, 2009, vol. 21, 1263-1284
- **LATHUILIÈRE, S** ; **MESEJO, P** ; **ALAMEDA-PINEDA, X** ; **HORAUD, R. A**. Comprehensive Analysis of Deep Regression. *IEEE Trans. Pattern Anal. Mach. Intell.*, 2020, vol. 42, 2065-2081
- Image Orientation Estimation with Convolutional Networks. **FISCHER, P** ; **DOSOVITSKIY, A** ; **BROX, T**. In Pattern Recognition. Springer International Publishing, 2015, vol. 9358, 368-378
- **LIU, X** ; **LIANG, W** ; **WANG, Y** ; **LI, S** ; **PEI, M**. 3D head pose estimation with convolutional neural network trained on synthetic images. *2016 IEEE International Conference on Image Processing (ICIP) (IEEE92016)*, S1289-1293
- **GARCÍA-ORDÁS, M. T.** ; **BENITEZ-ANDRADES, J. A.** ; **GARCIA-RODRIGUEZ, I** ; **BENAVIDES, C** ; **ALAIZ-MORETÓN, H**. Detecting Respiratory Pathologies Using Convolutional Neural Networks and Variational Autoencoders for Unbalancing Data. *Sensors*, 2020, vol. 20
- **ZHU, M** ; **WU, Y**. A Parallel Convolutional Neural Network for Pedestrian Detection. *Electronics*, 2020, vol. 9, 1478
- **MURUGESAN, B et al.** Psi-Net: Shape and Boundary aware joint multi-task deep network for medical image segmentation. *Jährliche internationale Konferenz der IEEE Engineering in Medicine and Biology Society. IEEE Engineering in Medicine and Biology Society. Annual International Conference 2019*, 2019, 7223-7226
- **SRIVASTAVA, N** ; **HINTON, G** ; **KRIZHEVSKY, A** ; **SUTSKEVER, I** ; **SALAKHUTDINOV, R**. Dropout: Ein einfacher Weg, um neuronale Netze vor Überanpassung zu bewahren. *J. Mach. Learn. Res.*, 2014, vol. 15, 1929-1958
- **MAIER, A** ; **SYBEN, C** ; **LASSER, T** ; **RIESS, C**. A gentle introduction to deep learning in medical image processing. *Z. Med. Phys.*, 2019, vol. 29, 86-101
- Generalised Dice Overlap as a Deep Learning Loss Function for Highly Unbalanced Segmentations. **SUDRE, C. H.** ; **VERCAUTEREN, T** ; **OURSELIN, S** ; **JORGE CARDOSO, M**. In Deep learning in medical image analysis and multimodal learning for clinical decision support - DLMIA 2017, ML-CDS 2017. Springer, 2017, 240-248
- **KINGMA, D. P.** ; **BA, J**. Adam: A Method for Stochastic Optimization. *3rd International Conference on Learning Representations, ICLR 2015 - Conference Track Proceedings*, 2015, 1-15
- **WILLIAMS, M. L.** On the Stress Distribution at the Base of a Stationary Crack. *J. Appl. Mech.*, 1957, vol. 24, 109-114
- **KHOR, W**. A CTOD equation based on the rigid rotational factor with the consideration of crack tip stunting due to strain hardening for SEN(B). *Fatigue Fract. Eng. Mater. Struct.*, 2019, vol. 42, 1622-1630
- **BREITBARTH et al.** *Determination of Stress Intensity Factors and J integral based on Digital Image Corrleation*, 2019, vol. 13, 12-25